# EUROPEAN PATENT APPLICATION

(11) **EP 4 589 286 A1**
(43) Date of publication of application: **23.07.2025**
(21) Application number: 23865001.4
(22) Date of filing: 07.06.2023
(51) Int. Cl.: G01N 21/76

(54) **INSPECTION DEVICE**

(30) Priority: 13.09.2022 JP 2022145618
(71) Applicant: FUJIFILM Corporation, Tokyo 106-8620 (JP)
(72) Inventor: TADA, Takuji, Ashigarakami-gun, Kanagawa 258-8538 (JP)
(74) Representative: Dehns Germany Partnerschaft mbB
(86) International application number: PCT/JP2023/021255
(87) International publication number: WO 2024/057637

(57) **Abstract**

An examination apparatus includes: a photodetector that detects chemiluminescence generated from a mixed solution containing a specimen and a luminescent reagent accommodated in a reaction cell, the photodetector being disposed at a position facing a side surface of the reaction cell and detecting the chemiluminescence emitted from the side surface of the reaction cell; and a shielding member that is disposed between the reaction cell and the photodetector, the shielding member shielding light that is generated due to bubbles formed on a liquid surface of the mixed solution in the reaction cell and travels toward the photodetector.

## Description

### BACKGROUND OF THE INVENTION

### 1. Field of the Invention

The present disclosure relates to an examination apparatus.

### 2. Description of the Related Art

An examination apparatus that quantitatively or qualitatively detects a target substance in a specimen has been known. Many of such examination apparatuses use an immunoassay principle, and examples thereof include a chemiluminescent enzyme immunological analysis apparatus and a fluorescence immunological analysis apparatus (for example, JP2016-085093A).

Such an examination apparatus executes a detecting process of detecting a target substance in a specimen by detecting luminescence or fluorescence based on a label such as an enzyme label or a fluorescent label attached to the target substance in the specimen by using an immunoreaction. Further, before such a detecting process of the target substance, a pre-process such as attachment of a label to the target substance in the specimen is executed on the specimen. In some cases, the examination apparatus is configured to automatically execute the pre-process and the detecting process and output the detection result in a case where the pre-process and the detecting process are automated and a specimen collection container accommodating the collected specimen is loaded.

In the automated examination apparatus, after dispensing a reagent for chemiluminescence into a specimen solution containing a specimen and mixing the specimen solution and the reagent, chemiluminescence is detected. Since the amount of the chemiluminescence is extremely small, the chemiluminescence needs to be efficiently received for accurate examination.

Therefore, a method for efficiently receiving the chemiluminescence has been proposed in the related art. For example, JP1994-203562A (JP-H05-203562A) and JP2003-28790A disclose a configuration of limiting a direction in which chemiluminescence is output from a cell that accommodates a specimen solution by forming a metal thin film on the outside of the cell. In addition, JP1975-094982A (JP-S50-094982A) and JP2018-009953A disclose a method of providing a spheroidal mirror or a reflective member for guiding chemiluminescence output from a cell to a detector.

### SUMMARY OF THE INVENTION

The chemiluminescence is generated due to a reaction between the reagent and the target substance, and the amount thereof is attenuated over time. Therefore, a period of time taken to execute the detecting process after dispensing the reagent is preferably short. On the other hand, the reagent and the specimen solution need to be sufficiently mixed. Therefore, it is desirable to stir the reagent and the specimen solution for a short period of time.

The present inventors found that bubbles are formed in the mixed solution during the stirring process, strong luminescence is generated in an interface with the bubbles, and thus a variation in the amount of light received and detected by a photodetector occurs due to a difference between the amounts of the bubbles formed. The variation in the amount of light received depending on the amount of the bubbles formed leads to a decrease in measurement accuracy. With the examination apparatuses disclosed in JP1994-203562A (JP-H05-203562A), JP2003-28790A, JP1975-094982A (JP-S50-094982A), and JP2018-009953A, light generated in the cell can be efficiently received by the detector. However, in the examination apparatuses, in a case where bubbles are formed, luminescence generated from the bubbles is also received by the detector. Thus, there is a problem in that the accuracy decreases due to the variation in the amount of light received depending on the amount of the bubbles formed.

The present disclosure has been made in view of the above circumstances, and an object thereof is to provide an examination apparatus where, even in a case where bubbles are formed, a decrease in measurement accuracy can be suppressed such that a highly reliable examination result can be obtained.

An examination apparatus according to the present disclosure comprises: a photodetector that detects chemiluminescence generated from a mixed solution containing a specimen and a luminescent reagent accommodated in a reaction cell, the photodetector being disposed at a position facing a side surface of the reaction cell and detecting the chemiluminescence emitted from the side surface of the reaction cell; and a shielding member that is disposed between the reaction cell and the photodetector, the shielding member shielding light that is generated due to bubbles formed on a liquid surface of the mixed solution in the reaction cell and travels toward the photodetector.

It is preferable that the examination apparatus further comprises a reflective member that is disposed between the reaction cell and the photodetector, reflects chemiluminescence emitted in a direction in which direct incidence into the photodetector is not allowed in the chemiluminescence emitted from the reaction cell, and causes at least a part of the reflected chemiluminescence to be incident into the photodetector.

It is preferable that the shielding member also functions as the reflective member.

It is preferable that the reflective member is emitted from the side surface of the reaction cell and is disposed around an optical path of light directly incident into a light-receiving surface of the photodetector.

It is preferable that the reflective member includes a reflecting surface that projects between the side surface of the reaction cell and the light-receiving surface of the photodetector.

The reflective member may include a plurality of the reflecting surfaces having different postures.

The plurality of reflecting surfaces may include two reflecting surfaces disposed in postures orthogonal to each other.

The reflective member may be a tubular member having both ends opened, one opening may be disposed to face the side surface of the reaction cell from which the chemiluminescence is emitted, another opening may be disposed to face the light-receiving surface of the photodetector, and an inner wall surface of the tubular member may be a reflecting surface.

The tubular member may have a shape where an inner diameter may decrease from the one opening toward the other opening.

It is preferable that the inner wall surface of the tubular member is a spheroidal mirror, the side surface of the reaction cell is positioned at one focal point of the spheroidal mirror, and the light-receiving surface of the photodetector is positioned at another focal point of the spheroidal mirror.

With the examination apparatus according to the present disclosed technology, even in a case where bubbles are formed, a decrease in measurement accuracy can be suppressed such that a highly reliable examination result can be obtained.

### BRIEF DESCRIPTION OF THE DRAWINGS

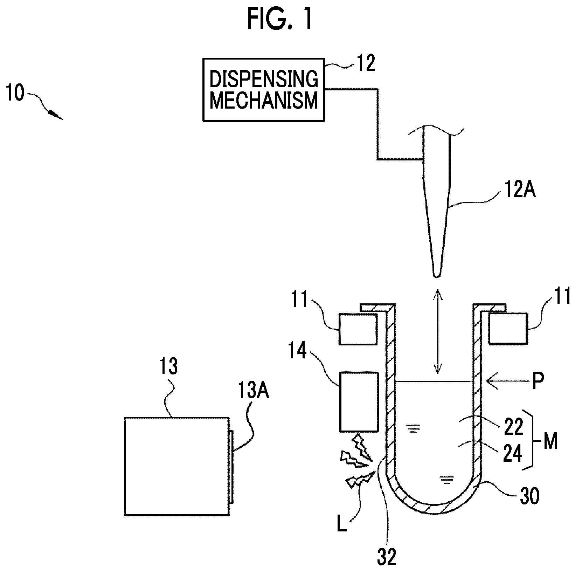

Fig. 1 is a schematic diagram showing an overall configuration of an examination apparatus.

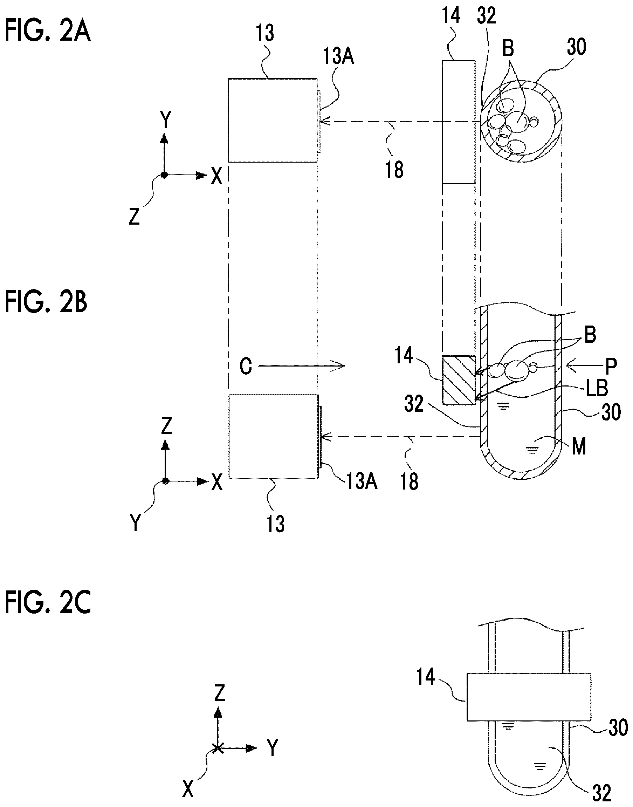

Figs. 2A to 2C are schematic diagrams showing a positional relationship between a photodetector, a shielding member, and a reaction cell, in which Fig. 2A is a plan view, Fig. 2B is a side view including a partial cross section, and Fig. 2C is a view taken in a direction of arrow C in Fig. 2B.

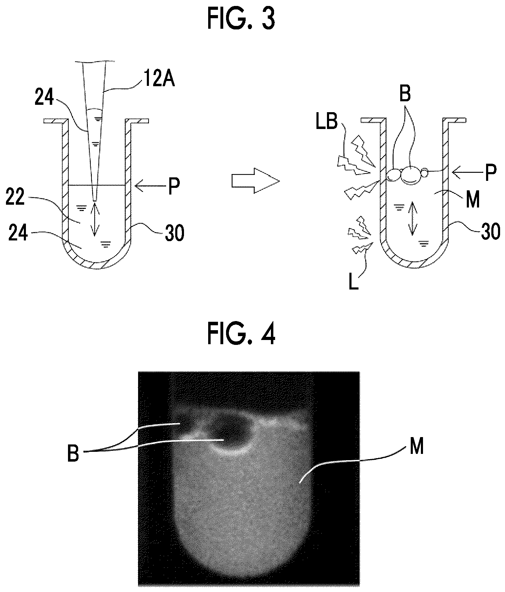

Fig. 3 is a diagram showing a mixing process of a specimen and a luminescent reagent, formation of bubbles, and light generated from the bubbles.
Fig. 4 is an image obtained by imaging the reaction cell where chemiluminescence is generated from a mixed solution.

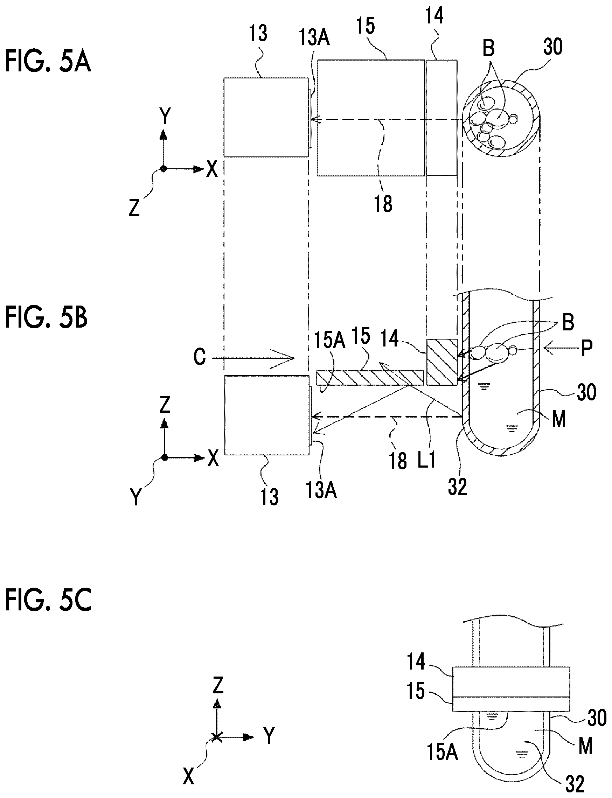

Figs. 5A to 5C are schematic diagrams showing a positional relationship between the photodetector, the reflective member, the shielding member, and the reaction cell, in which Fig. 5A is a plan view, Fig. 5B is a side view including a partial cross section, and Fig. 5C is a view taken in a direction of arrow C in Fig. 5B.

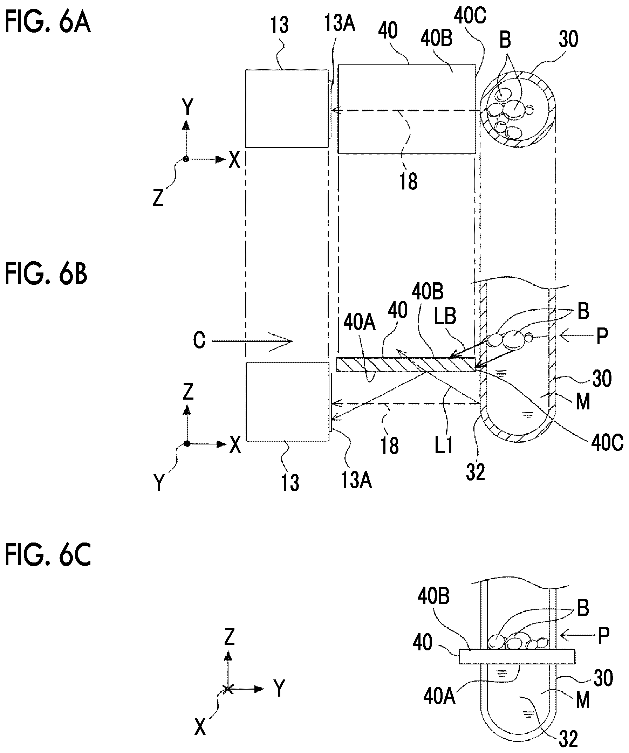

Figs. 6A to 6C are schematic diagrams showing a positional relationship between the photodetector, the shielding member, and the reaction cell, in which Fig. 6A is a plan view, Fig. 6B is a side view including a partial cross section, and Fig. 6C is a view taken in a direction of arrow C in Fig. 6B.

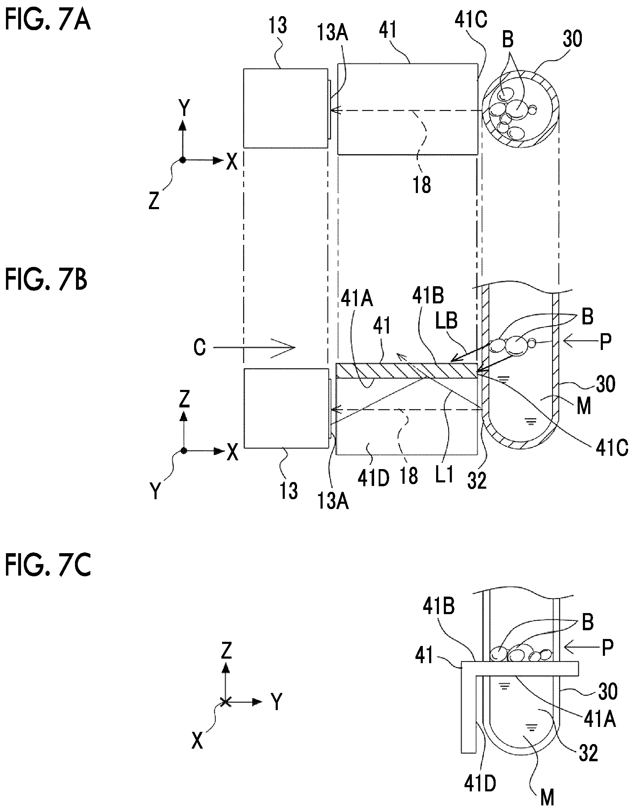

Figs. 7A to 7C are schematic diagrams showing a positional relationship between the photodetector, the shielding member, and the reaction cell, in which Fig. 7A is a plan view, Fig. 7B is a side view including a partial cross section, and Fig. 7C is a view taken in a direction of arrow C in Fig. 7B.

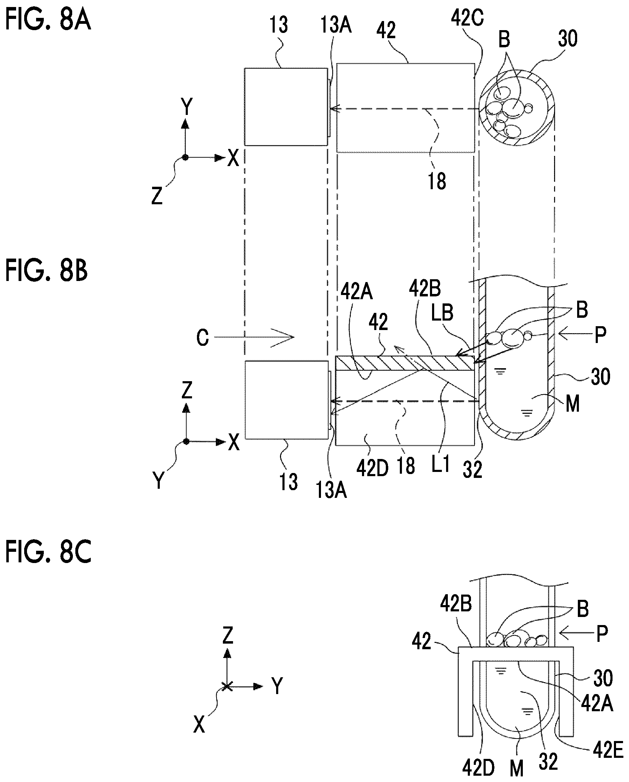

Figs. 8A to 8C are schematic diagrams showing a positional relationship between the photodetector, the shielding member, and the reaction cell, in which Fig. 8A is a plan view, Fig. 8B is a side view including a partial cross section, and Fig. 8C is a view taken in a direction of arrow C in Fig. 8B.

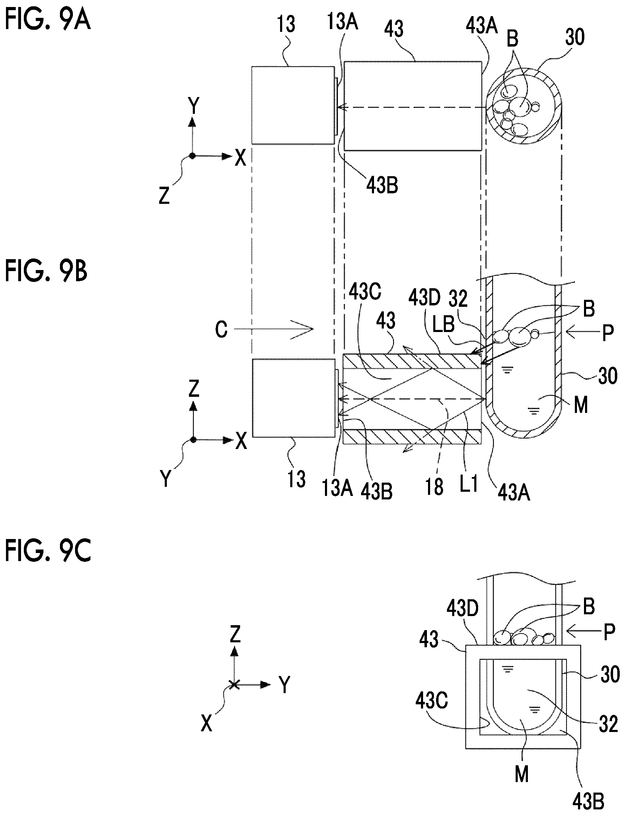

Figs. 9A to 9C are schematic diagrams showing a positional relationship between the photodetector, the shielding member, and the reaction cell, in which Fig. 9A is a plan view, Fig. 9B is a side view including a partial cross section, and Fig. 9C is a view taken in a direction of arrow C in Fig. 9B.

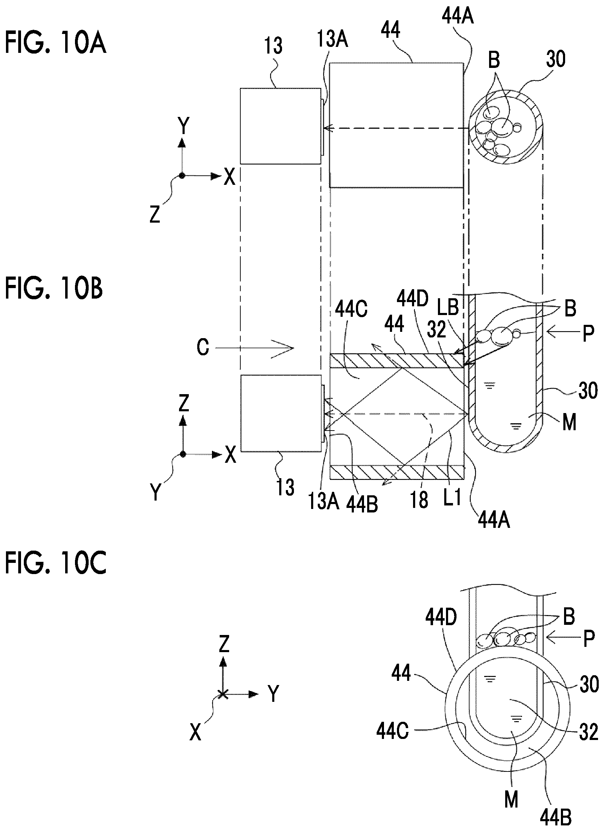

Figs. 10A to 10C are schematic diagrams showing a positional relationship between the photodetector, the shielding member, and the reaction cell, in which Fig. 10A is a plan view, Fig. 10B is a side view including a partial cross section, and Fig. 10C is a view taken in a direction of arrow C in Fig. 10B.

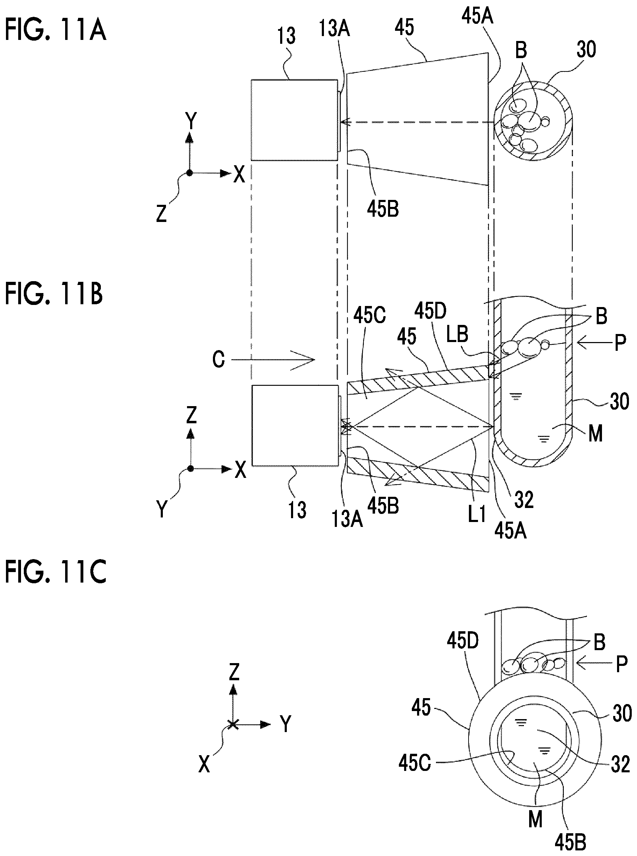

Figs. 11A to 11C are schematic diagrams showing a positional relationship between the photodetector, the shielding member, and the reaction cell, in which Fig. 11A is a plan view, Fig. 11B is a side view including a partial cross section, and Fig. 11C is a view taken in a direction of arrow C in Fig. 11B.

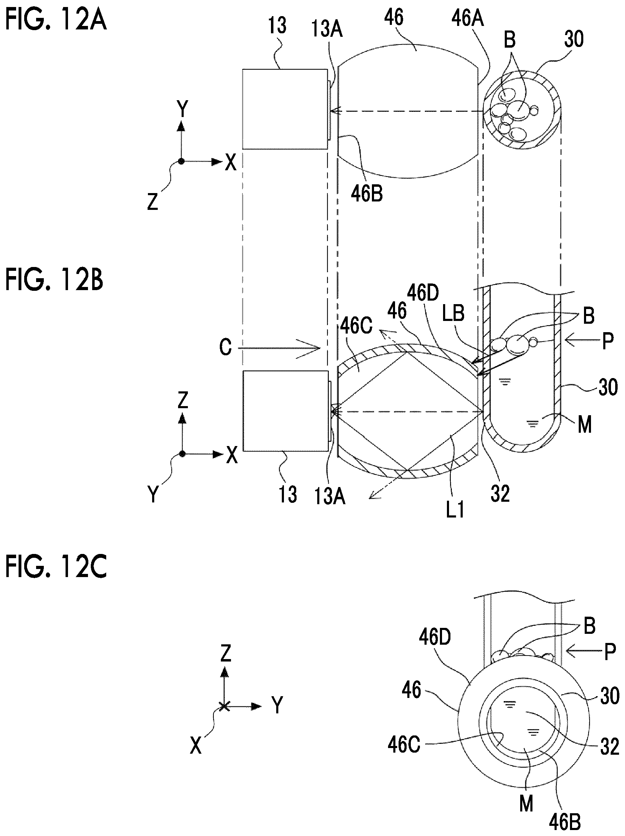

Figs. 12A to 12C are schematic diagrams showing a positional relationship between the photodetector, the shielding member, and the reaction cell, in which Fig. 12A is a plan view, Fig. 12B is a side view including a partial cross section, and Fig. 12C is a view taken in a direction of arrow C in Fig. 12B.

### DESCRIPTION OF THE PREFERRED EMBODIMENTS

Hereinafter, an examination apparatus according to an embodiment of the present disclosure will be described with reference to the drawings. In each drawing, the same components are represented by the same reference numerals.

Fig. 1 is a schematic diagram showing an overall configuration of an examination apparatus 10 according to the embodiment of the present disclosure. For example, the examination apparatus 10 is an immunological analysis apparatus that detects an examination target substance in a specimen 22 collected from a biological body by using an antigen-antibody reaction. The examination apparatus 10 optically detects the examination target substance in the specimen 22 using a reaction cell 30, and outputs an examination result.

The specimen 22 is, for example, a body fluid such as blood collected from the biological body. In a case where the specimen 22 is blood, the specimen 22 may be any of whole blood, blood plasma, serum, and the like. Further, the examination target substance that can be included in the specimen 22 is an antigen, an antibody, a protein, a low-molecular-weight compound, and the like. It should be noted that the specimen 22 is not limited to blood, and may be a substance collected from a biological body, such as urine or body fluid.

The examination apparatus 10 according to the present example executes an examination based on a chemiluminescent enzyme immunoassay method. The chemiluminescent enzyme immunoassay method of the present example will be simply described as follows. By discharging the specimen 22 into the reaction cell 30, the specimen 22 and a first binding substance fixed in advance to a solid phase such as magnetic particles are mixed. In a case where the specimen 22 contains an examination target substance, the first binding substance fixed in advance to the solid phase and the examination target substance in the specimen 22 are bonded to each other. Further, a labeling reagent containing a second binding substance to which a label is attached is mixed, the second binding substance specifically being bonded to the examination target substance. In a case where the specimen 22 contains an examination target substance, the label is attached to the examination target substance by mixing the specimen 22 with the labeling reagent. The label is an enzyme, and the enzyme emits chemiluminescence in the presence of a specific luminescent reagent. This way, in the chemiluminescent enzyme immunoassay method, the examination target substance is detected through the chemiluminescence generated by the chemical reaction between the label attached to the examination target substance and the luminescent reagent.

As shown in Fig. 1, the examination apparatus 10 includes, for example, a loading unit 11 on which the reaction cell 30 is loaded, a dispensing mechanism 12, a photodetector 13, and a shielding member 14.

The reaction cell 30 is attachably and detachably loaded on the loading unit 11 to hold the reaction cell 30 in the examination apparatus 10.

The dispensing mechanism 12 is a mechanism that dispenses a liquid, and includes a nozzle 12A that aspirates and discharges the liquid, a moving mechanism (not shown), and an aspiration and discharge mechanism (not shown). The moving mechanism is a mechanism that three-dimensionally moves the nozzle 12A in a vertical direction and a horizontal direction. The aspiration and discharge mechanism is a mechanism that executes an aspiration operation of causing the nozzle 12A to aspirate the liquid and a discharge operation of discharging the liquid from the nozzle 12A. The moving mechanism includes an actuator that generates a driving force of a motor or the like and a driving force transmission mechanism that consists of a gear, a drive belt, and the like. The aspiration and discharge mechanism includes a pump or the like that generates a driving force for aspiration, discharge, and the like.

The dispensing mechanism 12 aspirates and dispenses the liquid such as the specimen 22 and the reagent using the nozzle 12A. Specifically, the dispensing mechanism 12 dispenses various reagents into the reaction cell 30 accommodating the specimen 22. The examination apparatus 10 includes various reagent holding parts (not shown), and the dispensing mechanism 12 dispenses the reagent by discharging the reagent aspirated from various reagent holding parts into the reaction cell 30. Further, the dispensing mechanism 12 executes a mixing process of mixing the specimen 22 and the reagent in the reaction cell 30. The mixing process is executed, for example, by allowing the nozzle 12A to repeat the aspiration and the discharge of the liquid where the specimen 22 and the luminescent reagent or the like are mixed. Fig. 1 shows one nozzle 12A representing nozzles used for dispensing various reagents. However, the nozzle may be configured to be provided for each of the reagents to selectively use each of the nozzles.

The photodetector 13 detects chemiluminescence L generated from a mixed solution M containing the specimen 22 and a luminescent reagent 24 accommodated in the reaction cell 30. The photodetector 13 is disposed at a position facing a side surface 32 of the reaction cell 30 and detects the chemiluminescence L emitted from the side surface 32 of the reaction cell 30. The photodetector 13 facing the side surface 32 represents that a light-receiving surface 13A of the photodetector 13 faces the side surface 32. In the present example, the photodetector 13 includes a photomultiplier tube or a photodiode. The photodetector 13 optically detects the examination target substance to which the label is attached by receiving the chemiluminescence L. For example, the photodetector 13 is disposed to face the reaction cell 30, and receives the chemiluminescence L emitted from the mixed solution M where the specimen 22 and the luminescent reagent 24 are mixed. The examination apparatus 10 includes a processor (not shown), and the photodetector 13 outputs a light-receiving signal corresponding to the amount of light received to the processor. The processor detects whether or not the specimen 22 contains the examination target substance and the concentration thereof based on the light-receiving signal output from the photodetector 13.

The shielding member 14 is disposed between the reaction cell 30 and the photodetector 13. The shielding member 14 shields light that is generated due to bubbles B (refer to Figs. 2A to 2C) formed on a liquid surface P of the mixed solution M in the reaction cell 30 and travels toward the photodetector 13. The shape, the disposition, and the material of the shielding member 14 are not particularly limited as long as the light generated from the bubbles B can be prevented from being directly incident into the photodetector 13.

Figs. 2A to 2C are schematic diagrams showing a positional relationship between the reaction cell 30, the photodetector 13, and the shielding member 14. Fig. 2A is a plan view, Fig. 2B is a side view including a partial cross section, and Fig. 2C is a diagram showing the shielding member 14 and the reaction cell 30 from the photodetector 13 side (from a direction of arrow C in Fig. 2B). It is assumed that, in a horizontal plane, a direction in which the photodetector 13 and the reaction cell 30 are arranged is an X direction, a direction orthogonal to the X direction is a Y direction, and a direction perpendicular to an X-Y plane is a Z direction. The same applies to each of the following drawings.

As shown in Figs. 2A to 2C, for example, the shielding member 14 is a plate-shaped member. The shielding member 14 is disposed to face the side surface 32 of the reaction cell 30 that faces the photodetector 13. The shielding member 14 has a length in the Y direction longer than a diameter of the reaction cell 30 in the Y direction. In a case where the shielding member 14 is seen from the photodetector 13, the shielding member 14 is disposed at a position where the liquid surface P of the mixed solution M in the reaction cell 30 is hidden (refer to Fig. 2C).

As shown in Fig. 2B, the light generated from the bubbles B formed on the liquid surface P is shielded by the shielding member 14 and is not incident into the light-receiving surface 13A of the photodetector 13. In the shielding member 14, a surface into which the light from the bubbles B is incident may be formed of a light absorbing material, or may be formed of a reflecting surface that reflects light. In either case, light LB from the bubbles B can be prevented from being incident into the photodetector 13. On the other hand, the chemiluminescence L generated from the mixed solution M is emitted from the side surface 32 of the reaction cell 30 and is detected by the photodetector 13.

As shown on the left drawing of Fig. 3, during the detection of the chemiluminescence, the luminescent reagent 24 in the reaction cell 30 is dispensed by the nozzle 12A of the dispensing mechanism 12. The reaction cell 30 accommodates the specimen 22 to which the label is attached, and the specimen 22 and the luminescent reagent 24 are mixed. At this time, by repeating the aspiration and discharge of the luminescent reagent 24 in the reaction cell 30 using the nozzle 12A that dispenses the luminescent reagent 24 into the reaction cell 30, the specimen 22 and the luminescent reagent 24 are mixed. In a case where the label and the luminescent reagent 24 react with each other, the chemiluminescence L is immediately generated. Therefore, the mixing process of the specimen 22 and the luminescent reagent 24 needs to be executed within a short period of time.

In this mixing process, by repeating the aspiration and discharge of the luminescent reagent 24 within a short period of time, the bubbles B may be formed in the mixed solution M (refer to the right drawing of Fig. 3). In a case where the bubbles B are present in the mixed solution M during the detection of the chemiluminescence, the strong light LB is generated from an interface with the bubbles B, and a variation in examination result occurs depending on whether or not the bubbles B are present or whether the amount of the bubbles B is large or small. In a case where the light LB is incident into the photodetector 13, the amount of light received in the photodetector 13 is obtained by adding the light from the interface with the bubbles B to the pure chemiluminescence. Therefore, even in a case where the amount of the chemiluminescence is the same, a variation in the amount of light received by the photodetector 13 occurs depending on the amount of the bubbles formed, which affects the examination result. Fig. 4 is an image obtained by imaging the reaction cell where the chemiluminescence is generated from the mixed solution. Fig. 4 shows that extremely strong luminescence (a portion that looks white in the image) is generated from the interface between the spherical bubbles B formed on the liquid surface and the mixed solution M.

As described above, the examination apparatus 10 includes the shielding member 14 disposed between the reaction cell 30 and the photodetector 13. The shielding member 14 shields the light LB that is generated due to the bubbles B formed on the liquid surface P of the mixed solution M in the reaction cell 30 and travels toward the photodetector 13. As a result, the light LB generated from the bubbles B during the detection of the chemiluminescence L can be prevented from being directly incident into the photodetector 13. Therefore, a variation in the amount of light received can be suppressed. The variation in the amount of light received depending on the bubbles B can be suppressed. Therefore, the effect of the bubbles B on the examination can be suppressed, a decrease in measurement accuracy can be suppressed, and a highly reliable examination result can be obtained.

On the other hand, by including the shielding member 14, not only the light LB from the bubbles B but also a part of the chemiluminescence L generated from the mixed solution M are shielded by the shielding member 14, and the amount of the chemiluminescence L received by the photodetector 13 decreases. In order to execute the examination with higher accuracy, it is desired to increase the amount of the chemiluminescence L received while suppressing the light LB from the bubbles B. Accordingly, in the examination apparatus 10, as shown in Figs. 5A to 5C, it is preferable that a reflective member 15 is provided between the reaction cell 30 and the photodetector 13. Here, Figs. 5A to 5C are a collective term including Fig. 5A to Fig. 5C. Hereinafter, the same applies to Figs. 6A to 12C. Figs. 5A to 5C are schematic diagrams showing a positional relationship between the reaction cell 30, the photodetector 13, the shielding member 14, and the reflective member 15 in a case where the reflective member 15 is provided. Fig. 5A is a plan view, Fig. 5B is a side view including a partial cross section, and Fig. 5C is a diagram showing the reflective member 15, the shielding member 14, and the reaction cell 30 from the photodetector 13 side (from a direction of arrow C in Fig. 5B).

The reflective member 15 reflects chemiluminescence L1 (refer to Fig. 5B) emitted in a direction in which direct incidence into the photodetector 13 is not allowed in the chemiluminescence L emitted from the reaction cell 30, and causes at least a part of the reflected chemiluminescence L1 to be incident into the photodetector 13. The reflective member 15 may be a member that specularly reflects incidence light, or may be a member that diffusively reflects and scatters incidence light. In the present specification, "reflection" includes specular reflection and diffuse reflection, and "reflecting surface" includes a mirror surface that specularly reflects incidence light and a scattering surface that diffusively reflects incidence light.

In the example shown in Figs. 5A to 5C, the reflective member 15 is a plate-shaped member having a reflecting surface 15A that projects between the side surface 32 of the reaction cell 30 and the light-receiving surface 13A of the photodetector 13. The reflective member 15 has substantially the same length in the Y direction as the shielding member 14. The reflective member 15 is disposed such that the reflecting surface 15A is flush with a lower surface of the shielding member 14. The reflective member 15 is disposed such that the reflecting surface 15A faces an optical path 18 of the light that is emitted from the side surface 32 of the reaction cell 30 and is directly incident into the light-receiving surface 13A of the photodetector 13. In the example of Figs. 5A to 5C, the reflective member 15 is disposed in a posture where the optical path 18 and the reflecting surface 15A are parallel to each other above the optical path 18. As shown in Fig. 5B, at least a part of the chemiluminescence L1 that is emitted from the reaction cell 30 in a direction in which direct incidence into the photodetector 13 is not allowed is incident into the reflecting surface 15A of the reflective member 15, is reflected from the reflecting surface 15A, and is incident into the photodetector 13. The reflecting surface 15A may be a mirror surface that specularly reflects incidence light or may be a scattering surface that diffusively reflects incidence light. In addition, the reflecting surface 15A may be a surface including a mirror surface and a scattering surface, for example, a surface where a part is a mirror surface and the remaining part is a scattering surface.

This way, the examination apparatus 10 includes the shielding member 14 and the reflective member 15. By including the reflective member 15, in the chemiluminescence L emitted from the reaction cell 30, at least a part of the chemiluminescence L1 emitted in the direction in which direct incidence into the photodetector 13 is not allowed can be incident into the photodetector 13. Accordingly, in a case where the reflective member 15 is provided, in addition to the existing effect obtained by including the shielding member 14, the amount of light received by the photodetector 13 can be further improved as compared to a case where the reflective member 15 is not provided.

It is considered that, by disposing the light-receiving surface 13A of the photodetector 13 to be as close to the side surface 32 of the reaction cell 30 as possible, the light collection efficiency can be improved. In a photomultiplier tube that is generally used as the photodetector 13, there is a problem in that, as the environmental temperature increases, a dark current that is noise increases. During an examination using the specimen 22 derived from a biological body, generally, in order to promote a reaction of chemiluminescence, a relatively high temperature of about 37°C is maintained. In a case where the photomultiplier tube is used in the temperature environment, the dark current of the photomultiplier tube increases. Therefore, the photodetector 13 needs to be disposed at a certain distance from the reaction cell 30. This way, in a case where the photodetector 13 needs to be disposed at a distance from the side surface 32 of the reaction cell 30 that is a light emission surface, in the chemiluminescence L, the amount of the chemiluminescence L1 emitted in the direction in which direct incidence into the photodetector 13 is not allowed increases. Therefore, it is significantly effective to include the reflective member 15 that can guide the chemiluminescence L1 emitted in the direction in which direct incidence into the photodetector 13 is not allowed to the photodetector 13.

The reflective member 15 may be disposed around the optical path 18 and is not limited to the posture where the reflecting surface 15A shown in Fig. 5B is parallel to the XY plane and the configuration where the reflecting surface 15A is disposed above the optical path 18. For example, the reflecting surface 15A may be disposed below the optical path 18, or the reflective member 15 may be disposed in a posture where the reflecting surface 15A is parallel to a ZX plane. Here, the reflective member 15 being disposed around the optical path 18 includes not only a case where the reflective member 15 is disposed on the entire circumference surrounding the optical path 18 but also a case where the reflective member 15 is disposed on at least a part of the circumference. In a case where the reflective member 15 is disposed around the optical path 18, in the chemiluminescence L emitted from the reaction cell 30, at least a part of the chemiluminescence L1 emitted in the direction in which direct incidence into the photodetector 13 is not allowed is incident into the reflective member 15. Since the optical path is changed, the chemiluminescence L1 reflected from the reflective member 15 can be reflected in a direction in which at least a part thereof travels toward the photodetector 13.

In the example shown in Figs. 5A to 5C, the shielding member 14 and the reflective member 15 are provided as separate members. The shielding member 14 may also function as the reflective member 15. Referring to Figs. 6A to 12C, the example where the shielding member 14 also functions as the reflective member 15 will be described. Figs. 6A to 12C are schematic diagrams showing positional relationships between the reaction cell 30, the photodetector 13, and shielding members 40 to 46, respectively. In each of Figs. 6A to 12C, Fig. A is a plan view, Fig. B is a side view including a partial cross section, and Fig. C is a diagram showing each of the shielding members 40 to 46 and the reaction cell 30 from the photodetector 13 side (from a direction of arrow C in Fig. B).

The shielding member 40 in the example shown in Figs. 6A to 6C is a plate-shaped member. The shielding member 40 is disposed in a posture where one side surface 40C faces the side surface 32 of the reaction cell 30 facing the photodetector 13 and a reflecting surface 40A faces the optical path 18. In addition, the shielding member 40 has the reflecting surface 40A that projects between the side surface 32 of the reaction cell 30 and the light-receiving surface 13A of the photodetector 13, and is disposed in a posture where the reflecting surface 40A faces the optical path 18 of the light that is emitted from the side surface 32 of the reaction cell 30 and is directly incident into the light-receiving surface 13A of the photodetector 13. In addition, the shielding member 40 is disposed at a position where a surface 40B (hereinafter, an upper surface 40B) opposite to the reflecting surface 40A is lower than the liquid surface P of the mixed solution M in the reaction cell 30.

As shown in Fig. 6B, the light LB that travels from the bubbles B toward the photodetector 13 is incident into and reflected from the upper surface 40B or the side surface 40C of the shielding member 40. That is, the incidence of the light LB into the photodetector 13 is prevented by the shielding member 40. In addition, at least a part of the chemiluminescence L1 that is emitted from the reaction cell 30 in a direction in which direct incidence into the photodetector 13 is not allowed is incident into the reflecting surface 40A of the shielding member 40, is reflected from the reflecting surface 40A, and is incident into the photodetector 13.

This way, the shielding member 40 has the functions of both of the shielding member 14 and the reflective member 15 described in Figs. 5A to 5C, the same effects as those in a case where both of the shielding member 14 and the reflective member 15 are provided can be obtained. In addition, since the single member is provided, it is easy to handle the shielding member 40, and a low cost can be realized.

Each of the reflective member 15 shown in Figs. 5A to 5C and the shielding member 40 shown in Figs. 6A to 6C is configured to include only one reflecting surface that reflects the chemiluminescence L1 emitted in the direction in which direct incidence into the photodetector 13 is not allowed. In the present disclosed technology, the reflective member or the shielding member that also functions as the reflective member may include a plurality of reflecting surfaces having different postures.

The shielding member 41 in the example shown in Figs. 7A to 7C is a member where a side surface shape is an L-shape (refer to Fig. 7C). The shielding member 41 includes a plurality of reflecting surfaces (here, two reflecting surfaces 41A and 41D) having different postures, and the two reflecting surfaces 41A and 41D are orthogonal to each other. The shielding member 41 is disposed in a posture where one side surface 41C faces the side surface 32 of the reaction cell 30 facing the photodetector 13 and the reflecting surfaces 41A and 41D face the optical path 18. The reflecting surfaces 41A and 41D are disposed to surround the optical path 18 from two directions around the optical path 18. In the present example, the reflecting surface 41A is disposed parallel to the XY plane, and the reflecting surface 41D is disposed parallel to the ZX plane orthogonal to the XY plane. In addition, the shielding member 41 is disposed at a position where a surface 41B (hereinafter, an upper surface 41B) opposite to the reflecting surface 41A disposed parallel to the XY plane is lower than the liquid surface P of the mixed solution M in the reaction cell 30.

As shown in Fig. 7B, the light LB that travels from the bubbles B toward the photodetector 13 is incident into and reflected from the upper surface 41B or the side surface 41C of the shielding member 41. That is, the incidence of the light LB into the photodetector 13 is prevented by the shielding member 41. In addition, at least a part of the chemiluminescence L1 that is emitted from the reaction cell 30 in a direction in which direct incidence into the photodetector 13 is not allowed is incident into the reflecting surface 41A or the reflecting surface 41D of the shielding member 41, is reflected from the reflecting surface 41A or the reflecting surface 41D, and is incident into the photodetector 13.

This way, the shielding member 41 has the functions of both of the shielding member 14 and the reflective member 15 described in Figs. 5A to 5C, the same effects as those in a case where both of the shielding member 14 and the reflective member 15 are provided can be obtained. In addition, since the single member is provided, it is easy to handle the shielding member 41, and a low cost can be realized. Since the shielding member 41 includes the two reflecting surfaces 41A and 41D, the chemiluminescence L1 incident into the two reflecting surfaces 41A and 41D can be reflected. Accordingly, as compared to a case where the shielding member 40 of Figs. 6A to 6C including the one reflecting surface 40A is provided, a larger amount of the chemiluminescence L1 can be reflected and incident into the photodetector 13, and the light receiving efficiency can be improved.

The shielding member 42 in the example shown in Figs. 8A to 8C is a member where a side surface shape is an U-shape (refer to Fig. 8C). The shielding member 42 includes a plurality of reflecting surfaces (here, three reflecting surfaces 42A, 42D, and 42E) having different postures. Among the plurality of reflecting surfaces, the reflecting surface 42A and the reflecting surface 42D are orthogonal to each other, and the reflecting surface 42A and the reflecting surface 42E are orthogonal to each other. The shielding member 42 is disposed in a posture where one side surface 42C faces the side surface 32 of the reaction cell 30 facing the photodetector 13 and the reflecting surfaces 42A, 42D, and 42E face the optical path 18. The reflecting surfaces 42A, 42D, and 42E are disposed to surround the optical path 18 from three directions around the optical path 18. In the present example, the reflecting surface 42A is disposed parallel to the XY plane, and the reflecting surfaces 42D and 42E are disposed parallel to the ZX plane orthogonal to the XY plane. In addition, the shielding member 42 is disposed at a position where a surface 42B (hereinafter, an upper surface 42B) opposite to the reflecting surface 42A disposed parallel to the XY plane is lower than the liquid surface P of the mixed solution M in the reaction cell 30.

As shown in Fig. 8B, the light LB that travels from the bubbles B toward the photodetector 13 is incident into and reflected from the upper surface 42B or the side surface 42C of the shielding member 42. That is, the incidence of the light LB into the photodetector 13 is prevented by the shielding member 42. In addition, at least a part of the chemiluminescence L1 that is emitted from the reaction cell 30 in a direction in which direct incidence into the photodetector 13 is not allowed is incident into the reflecting surface 42A, the reflecting surface 42D, or the reflecting surface 42E of the shielding member 42, is reflected from the reflecting surface 42A, the reflecting surface 42D, or the reflecting surface 42E, and is incident into the photodetector 13.

This way, the shielding member 42 has the functions of both of the shielding member 14 and the reflective member 15 described in Figs. 5A to 5C, the same effects as those in a case where both of the shielding member 14 and the reflective member 15 are provided can be obtained. In addition, since the single member is provided, it is easy to handle the shielding member 42, and a low cost can be realized. Since the shielding member 42 includes the three reflecting surfaces 42A, 42D, and 42E, the chemiluminescence L1 incident in the directions of the three reflecting surfaces 42A, 42D, and 42E can be reflected. Accordingly, as compared to a case where the shielding member 40 of Figs. 6A to 6C including the one reflecting surface 40A and the shielding member 41 of Figs. 7A to 7C including the two reflecting surfaces 41A and 41D are provided, a larger amount of the chemiluminescence L1 can be reflected and incident into the photodetector 13, and the amount of light received can be increased.

As shown in Figs. 9A to 9C, the shielding member 43 may be a tubular member having both ends opened. In the shielding member 43, one opening 43A is disposed to face the side surface 32 of the reaction cell 30 from which the chemiluminescence L1 is emitted, and another opening 43B is disposed to face the light-receiving surface 13A of the photodetector 13. In the shielding member 43, an inner wall surface of the tubular member is a reflecting surface 43C. The shielding member 43 is disposed such that four inner wall surfaces that are the reflecting surface 43C surround the optical path 18. An upper surface 43D of the shielding member 43 is disposed at a position where the upper surface 43D is lower than the liquid surface P of the mixed solution M in the reaction cell 30.

As shown in Fig. 9B, the light LB that travels from the bubbles B toward the photodetector 13 is incident into and reflected from the upper surface 43D of the shielding member 43 or a side surface thereof where the one opening 43A is formed. That is, the incidence of the light LB into the photodetector 13 is prevented by the shielding member 43. In addition, at least a part of the chemiluminescence L1 that is emitted from the reaction cell 30 in a direction in which direct incidence into the photodetector 13 is not allowed is incident into the reflecting surface 43C of the shielding member 43, is reflected from the reflecting surface 43C, and is incident into the photodetector 13.

This way, the shielding member 43 has the functions of both of the shielding member 14 and the reflective member 15 described in Figs. 5A to 5C, the same effects as those in a case where both of the shielding member 14 and the reflective member 15 are provided can be obtained. In addition, since the single member is provided, it is easy to handle the shielding member 43, and a low cost can be realized. Since the shielding member 43 includes the optical path on the reflecting surface 43C, a large amount of the chemiluminescence L1 can be reflected. Accordingly, as compared to a case where the shielding members 40 to 42 including one to three reflecting surfaces, a larger amount of the chemiluminescence L1 can be reflected and incident into the photodetector 13, and the light receiving efficiency can be improved.

The shielding member 43 is a quadrangular tubular member having a quadrangular hollow but may be a polygonal tubular member having a polygonal prism shape such as a pentagonal prism shape or a hexagonal prism shape.

Further, as shown in Figs. 10A to 10C, the shielding member 44 may be a cylindrical tubular member having a columnar hollow. In the shielding member 44, one opening 44A is disposed to face the side surface 32 of the reaction cell 30 from which the chemiluminescence L1 is emitted, and another opening 44B is disposed to face the light-receiving surface 13A of the photodetector 13. In the shielding member 44, an inner wall surface of the tubular member is a reflecting surface 44C. The shielding member 44 is disposed such that the inner wall surface that is the reflecting surface 44C surround the optical path 18. In addition, the shielding member 44 is disposed at position where a position in the Z direction closest to the liquid surface P side on the outer circumference where the one opening 44A is formed is lower than the liquid surface P.

In the present example, as shown in Fig. 10B, the light LB that travels from the bubbles B toward the photodetector 13 is incident into and reflected from an outer circumferential surface 44D of the shielding member 44 or a side surface thereof where the one opening 44A is formed. That is, the incidence of the light LB into the photodetector 13 is prevented by the shielding member 44. In addition, at least a part of the chemiluminescence L1 that is emitted from the reaction cell 30 in a direction in which direct incidence into the photodetector 13 is not allowed is incident into the reflecting surface 44C of the shielding member 44, is reflected from the reflecting surface 44C, and is incident into the photodetector 13.

This way, the shielding member 44 obtains the same effect as that of the shielding member 43 consisting of the prism tubular member shown in Figs. 9A to 9C.

The shielding member 45 in the example shown in Figs. 11A to 11C is a tubular member having a shape where an inner diameter decreases from one opening 45A toward another opening 45B. As in the cylindrical tubular member of Figs. 10A to 10C, the shielding member 45 is disposed such that an inner wall surface is a reflecting surface 45C and the inner wall surface that is the reflecting surface 45C surrounds the optical path 18. In addition, the shielding member 45 is disposed at position where a position in the Z direction closest to the liquid surface P side on the outer circumference where the one opening 45A is formed is lower than the liquid surface P.

In the present example, as shown in Fig. 11B, the light LB that travels from the bubbles B toward the photodetector 13 is incident into and reflected from an outer circumferential surface 45D of the shielding member 45 or a side surface thereof where the one opening 45A is formed. That is, the incidence of the light LB into the photodetector 13 is prevented by the shielding member 45. In addition, at least a part of the chemiluminescence L1 that is emitted from the reaction cell 30 in a direction in which direct incidence into the photodetector 13 is not allowed is incident into the reflecting surface 45C of the shielding member 45, is reflected from the reflecting surface 45C, and is incident into the photodetector 13.

The chemiluminescence L1 emitted from the reaction cell 30 can be incident from the relatively large opening 45A into the hollow of the shielding member 45, can be guided to the relatively small opening 45B side, and can be incident into the light-receiving surface 13A. Therefore, the light receiving efficiency can be further improved as compared to the shielding member 44 shown in Figs. 10A to 10C where the inner diameter is fixed.

It is preferable that the one opening 45A is disposed close to or in contact with the side surface 32 of the reaction cell 30, and it is preferable that the other opening 45B is disposed close to or in contact with the light-receiving surface 13A of the photodetector 13. It is preferable that an opening diameter of the one opening 45A facing the side surface 32 of the reaction cell 30 has a sufficient opening area where the light LB traveling from the bubbles B toward the photodetector 13 can be shielded but the chemiluminescence L1 from the mixed solution M can be collected. It is preferable that an opening area of the other opening 45B facing the light-receiving surface 13A of the photodetector 13 is the same as that of the light-receiving surface 13A. As a result, the light receiving efficiency can be more effectively improved.

Further, the shielding member 46 shown in Fig. 12A to 12C is a tubular member where an inner wall surface is a spheroidal mirror 46C that is one form of the reflecting surface. In the shielding member 46, one opening 46A is disposed to face the side surface 32 of the reaction cell 30 from which the chemiluminescence L1 is emitted, and another opening 46B is disposed to face the light-receiving surface 13A of the photodetector 13. The shielding member 46 is disposed in an aspect where the spheroidal mirror 46C surrounds the optical path 18, the side surface 32 from which the chemiluminescence L1 of the reaction cell 30 is emitted is positioned at one focal point of the spheroidal mirror 46C, and the light-receiving surface 13A of the photodetector 13 is positioned at another focal point of the spheroidal mirror 46C. In addition, the shielding member 46 is disposed at position where a position in the Z direction closest to the liquid surface P side on the outer circumference where the one opening 46A is formed is lower than the liquid surface P.

In the present example, as shown in Fig. 12B, the light LB that travels from the bubbles B toward the photodetector 13 is incident into and reflected from an outer circumferential surface 46D of the shielding member 46 or a side surface thereof where the one opening 46A is formed. That is, the incidence of the light LB into the photodetector 13 is prevented by the shielding member 46. In addition, at least a part of the chemiluminescence L1 that is emitted from the side surface 32 of the reaction cell 30 in the direction in which direct incidence into the photodetector 13 is not allowed is incident into the spheroidal mirror 46C that is the reflecting surface of the shielding member 46, is reflected from the spheroidal mirror 46C, and is incident into the light-receiving surface 13A. The shielding member 46 includes the spheroidal mirror 46C as the reflecting surface. Therefore, the chemiluminescence L1 emitted from the side surface 32 can be reliably guided to the light-receiving surface 13A.

In the above-mentioned example, the immunological analysis apparatus that detects the examination target substance in the specimen using the antigen-antibody reaction has been described as an example of the examination apparatus 10. Of course, the present disclosed technology can also be used for an examination apparatus other than the immunological analysis apparatus.

Further, the disclosure of JP2022-145618 filed on September 13, 2022 is incorporated herein by reference in its entirety. All publications, patent applications, and technical standards mentioned in this specification are herein incorporated by reference to the same extent as if each individual publication, patent application, or technical standard was specifically and individually indicated to be incorporated by reference.

## Claims

1. An examination apparatus comprising:
a photodetector that detects chemiluminescence generated from a mixed solution containing a specimen and a luminescent reagent accommodated in a reaction cell, the photodetector being disposed at a position facing a side surface of the reaction cell and detecting the chemiluminescence emitted from the side surface of the reaction cell; and
a shielding member that is disposed between the reaction cell and the photodetector, the shielding member shielding light that is generated due to bubbles formed on a liquid surface of the mixed solution in the reaction cell and travels toward the photodetector.

2. The examination apparatus according to claim 1, further comprising a reflective member that is disposed between the reaction cell and the photodetector, reflects chemiluminescence emitted in a direction in which direct incidence into the photodetector is not allowed in the chemiluminescence emitted from the reaction cell, and causes at least a part of the reflected chemiluminescence to be incident into the photodetector.

3. The examination apparatus according to claim 2,
wherein the shielding member also functions as the reflective member.

4. The examination apparatus according to claim 2 or 3,
wherein the reflective member is emitted from the side surface of the reaction cell and is disposed around an optical path of light directly incident into a light-receiving surface of the photodetector.

5. The examination apparatus according to claim 4,
wherein the reflective member includes a reflecting surface that projects between the side surface of the reaction cell and the light-receiving surface of the photodetector.

6. The examination apparatus according to claim 5,
wherein the reflective member includes a plurality of the reflecting surfaces having different postures.

7. The examination apparatus according to claim 6,
wherein the plurality of reflecting surfaces include two reflecting surfaces disposed in postures orthogonal to each other.

8. The examination apparatus according to claim 4,
wherein the reflective member is a tubular member having both ends opened, one opening is disposed to face the side surface of the reaction cell from which the chemiluminescence is emitted, another opening is disposed to face the light-receiving surface of the photodetector, and an inner wall surface of the tubular member is a reflecting surface.

9. The examination apparatus according to claim 8,
wherein the tubular member has a shape where an inner diameter decreases from the one opening toward the other opening.

10. The examination apparatus according to claim 8,
wherein the inner wall surface of the tubular member is a spheroidal mirror, the side surface of the reaction cell is positioned at one focal point of the spheroidal mirror, and the light-receiving surface of the photodetector is positioned at another focal point of the spheroidal mirror.
